# EUROPÄISCHE PATENTSCHRIFT

(11) **EP 1 375 944 B1**
(45) Veröffentlichungstag und Bekanntmachung des Hinweises auf die Patenterteilung: **10.11.2004**
(21) Anmeldenummer: 03009293.6
(22) Anmeldetag: 24.04.2003
(51) Int. Cl.: F16D 13/75

(54) **Druckplattenbaugruppe für eine Reibungskupplung**
Pressure plate assembly for friction clutch
Ensemble plateau de pression pour un embrayage à friction

(30) Priorität: 19.06.2002 DE 10227330
(43) Veröffentlichungstag der Anmeldung: 02.01.2004
(73) Patentinhaber: ZF Sachs AG, 97424 Schweinfurt (DE)
(72) Erfinder: Lindner, Joachim, Dipl.Ing., 97456 Dittelbrunn (DE); Weidinger, Reinhold, Dipl.Ing.(FH), 97509 Unterspiesheim (DE); Ziegler, Erwin, 97535 Wasserlosen (DE)

(56) Entgegenhaltungen:
- DE-A- 19 910 858
- FR-A- 2 782 135
- US-B1- 6 334 520

## Beschreibung

Die vorliegende Erfindung betrifft eine Druckplattenbaugruppe für eine Reibungskupplung, umfassend eine zur Verbindung mit einer Schwungmassenanordnung ausgebildete Gehäuseanordnung, eine in der Gehäuseanordnung in Richtung einer Drehachse bewegbar gehaltene Anpressplatte, einen Kraftspeicher, eine im Kraftübertragungsweg zwischen dem Kraftspeicher und der Anpressplatte wirkende Verschleißnachstellvorrichtung, wobei die Verschleißnachstellvorrichtung wenigstens ein zur Verschleißnachstellung in einer Nachstellrichtung bewegbares Nachstellelement aufweist, wenigstens eine Spielgeberanordnung, umfassend ein an der Anpressplatte vorgesehenes Erfassungselement, das bei Auftreten von Verschleiß in Anlage an einem bezüglich der Gehäuseanordnung festgelegten Blockierelement kommt oder bringbar ist, wobei das Blockierelement einen Befestigungsbereich zur Festlegung desselben bezüglich der Gehäuseanordnung sowie einen Anlagebereich zur Anlage des Erfassungselements aufweist.

Eine derartige Druckplattenbaugruppe ist beispielsweise aus der DE 199 10 858 A1 bekannt. Bei einer Ausgestaltungsform dieser bekannten Druckplattenbaugruppe ist ein beispielsweise aus Blech ausgestanztes plattenartiges Blockierelement in einem Außenumfangsbereich der Gehäuseanordnung durch einen Schraubbolzen an der Gehäuseanordnung festgelegt und ragt von dort nach radial innen zur Anlagewechselwirkung mit dem Erfassungselement. Auf Grund seiner langgestreckten Formgebung unterliegt das Blockierelement bei Anlage des Erfassungselements einer vergleichsweise großen Biegebelastung, so dass durch die möglicherweise auftretende Verbiegung Ungenauigkeiten bei der Zusammenwirkung mit dem Erfassungselement und insofern auch Ungenauigkeiten bei der in Reaktion daraufhin durchzuführenden Verschleißnachstellung auftreten können.

Es ist die Aufgabe der vorliegenden Erfindung, bei einer gattungsgemäßen Druckplattenbaugruppe dafür zu sorgen, dass die Verschleißerfassung mit hoher Genauigkeit durchgeführt werden kann.

Gemäß der vorliegenden Erfindung wird diese Aufgabe gelöst durch eine Druckplattenbaugruppe für eine Reibungskupplung, umfassend eine zur Verbindung mit einer Schwungmassenanordnung ausgebildete Gehäuseanordnung, eine in der Gehäuseanordnung in Richtung einer Drehachse bewegbar gehaltene Anpressplatte, einen Kraftspeicher, eine im Kraftübertragungsweg zwischen dem Kraftspeicher und der Anpressplatte wirkende Verschleißnachstellvorrichtung, wobei die Verschleißnachstellvorrichtung wenigstens ein zur Verschleißnachstellung in einer Nachstellrichtung bewegbares Nachstellelement aufweist, wenigstens eine Spielgeberanordnung, umfassend ein an der Anpressplatte vorgesehenes Erfassungselement, das bei Auftreten von Verschleiß in Anlage an einem bezüglich der Gehäuseanordnung festgelegten Blockierelement kommt oder bringbar ist, wobei das Blockierelement einen Befestigungsbereich zur Festlegung desselben bezüglich der Gehäuseanordnung sowie einen Anlagebereich zur Anlage des Erfassungselements aufweist.

Erfindungsgemäß ist dabei weiter vorgesehen, dass das Blockierelement ferner einen Abstützbereich zur Abstützung desselben bezüglich der Gehäuseanordnung aufweist.

Bei der erfindungsgemäß ausgestalteten Druckplattenbaugruppe ist also das Blockierelement nicht nur im Bereich seines Befestigungsbereichs bezüglich der Gehäuseanordnung festgehalten. Vielmehr ist ein weiterer Bereich vorhanden, in welchem eine Abstützung erfolgt, so dass der durch Belastung vermittels des Erfassungselements möglicherweise induzierten Verformung entgegengewirkt wird.

Nach einer besonders bevorzugten Ausgestaltungsform kann vorgesehen sein, dass der Abstützbereich zwischen dem Befestigungsbereich und dem Anlagebereich vorgesehen ist. Um die Zusammenwirkung des Abstützbereichs mit der Gehäuseanordnung zu ermöglichen, wird vorgeschlagen, dass der Abstützbereich wenigstens einen zur Abstützung an einem Außenumfangsbereich der Gehäuseanordnung vorgesehenen Abstützabschnitt umfasst. Hierbei wird eine besonders stabile Abstützung dadurch erlangt, dass wenigstens zwei Abstützabschnitte in Umfangsrichtung mit Abstand zueinander vorgesehen sind.

Bei einer besonders bevorzugten Ausgestaltungsform kann vorgesehen sein, dass das Blockierelement abgewinkelt ausgebildet ist zum Bereitstellen des Befestigungsbereichs mit axialem Versatz zum Anlagebereich und dass der wenigstens eine Abstützabschnitt sich von einem den Befestigungsbereich mit dem Anlagebereich verbindenden Abschnitt des Blockierelements weg erstreckt.

Um zu verhindern, dass bereits vor dem Zusammenwirken der Druckplattenbaugruppe mit einer Schwungmassenanordnung das Erfassungselement durch das Blockierelement ausgelenkt werden könnte, wird vorgeschlagen, dass ein Trägerelement vorgesehen ist, durch welches das Blockierelement an der Gehäuseanordnung derart getragen ist, dass vor dem Verbinden der Druckplattenbaugruppe mit der Schwungmassenanordnung das Blockierelement in einem Zustand ist, in welchem es nicht zur Blockierwechselwirkung mit dem zugeordneten Erfassungselement bereit ist.

Dabei kann das Blockierelement durch das Trägerelement im Bereich eines in Anlage an der Schwungmassenanordnung zu positionierenden Randbereichs der Gehäuseanordnung getragen sein. Beim Zusammensetzen der Gehäuseanordnung mit der Schwungmassenanordnung kann dann das Trägerelement zusammen mit dem Blockierelement in Richtung der Drehachse verlagert werden.

Um in einfacher, gleichwohl jedoch stabil wirkender Art und Weise die Festlegung des Blockierelements bezüglich der Gehäuseanordnung erlangen zu können, wird vorgeschlagen, dass bei mit der Schwungmassenanordnung verbundener Gehäuseanordnung das Blockierelement durch Klemmwirkung zwischen der Gehäuseanordnung und der Schwungmassenanordnung festgehalten ist. Weiter ist es vorteilhaft, wenn bei mit der Schwungmassenanordnung verbundener Gehäuseanordnung das Blockierelement mit dem wenigstens einen Abstützabschnitt unter Vorspannung an der Gehäuseanordnung anliegt. Auf diese Art und Weise wird sichergestellt, dass von Anfang an das Blockierelement in einer definierten Positionierung bezüglich der Gehäuseanordnung gehalten ist. Ferner wird dadurch das Auftreten von Anschlaggeräuschen vermieden. Um eine derartige Anordnung realisieren zu können, wird vorgeschlagen, dass das Blockierelement durch ein Federelement mit dem wenigstens einen Abstützabschnitt in Anlage an der Gehäuseanordnung vorgespannt ist, wobei weiter vorgesehen sein kann, dass das Trägerelement das Federelement bildet.

Die erfindungsgemäße Druckplattenbaugruppe kann ferner ein Arretierelement aufweisen, welches durch Federvorspannung in einen zwischen dem Erfassungselement und der Anpressplatte gebildeten Zwischenraum vorgespannt ist und durch welches das Erfassungselement bei durch Anlage desselben an dem Blockierelement verursachter Auslenkung bezüglich der Anpressplatte gegen Rückbewegung aus der Auslenkstellung arretierbar ist. Das Arretierelement kann beispielsweise keilartig ausgebildet sein.

Ferner betrifft die vorliegende Erfindung eine Reibungskupplung mit einer erfindungsgemäßen Druckplattenbaugruppe.

Im Folgenden wird die vorliegende Erfindung mit Bezug auf die beiliegenden Zeichnungen anhand bevorzugter Ausgestaltungsformen detailliert beschrieben. Es zeigt:
- Fig. 1: eine Teil-Axialansicht einer Druckplattenbaugruppe;
- Fig. 2: eine Teil-Schnittansicht der in Fig. 1 dargestellten Druckplattenbaugruppe, geschnitten in einer Ebene II - II in Fig. 1;
- Fig. 3: eine Ansicht der erfindungsgemäßen Druckplattenbaugruppe von radial außen;
- Fig. 4: eine Schnittansicht der in Fig. 3 dargestellten Druckplattenbaugruppe, geschnitten längs einer Linie IV - IV in Fig. 3;
- Fig. 5: eine der Fig. 3 entsprechende Ansicht einer alternativen Ausgestaltungsform der erfindungsgemäßen Druckplattenbaugruppe bzw. Reibungskupplung;
- Fig. 6: eine Schnittansicht der in Fig. 5 dargestellten Druckplattenbaugruppe, geschnitten längs einer Linie VI - VI in Fig. 5;
- Fig. 7: eine perspektivische Ansicht eines bei der Ausgestaltungsform gemäß Fig. 5 eingesetzten Federelementes.

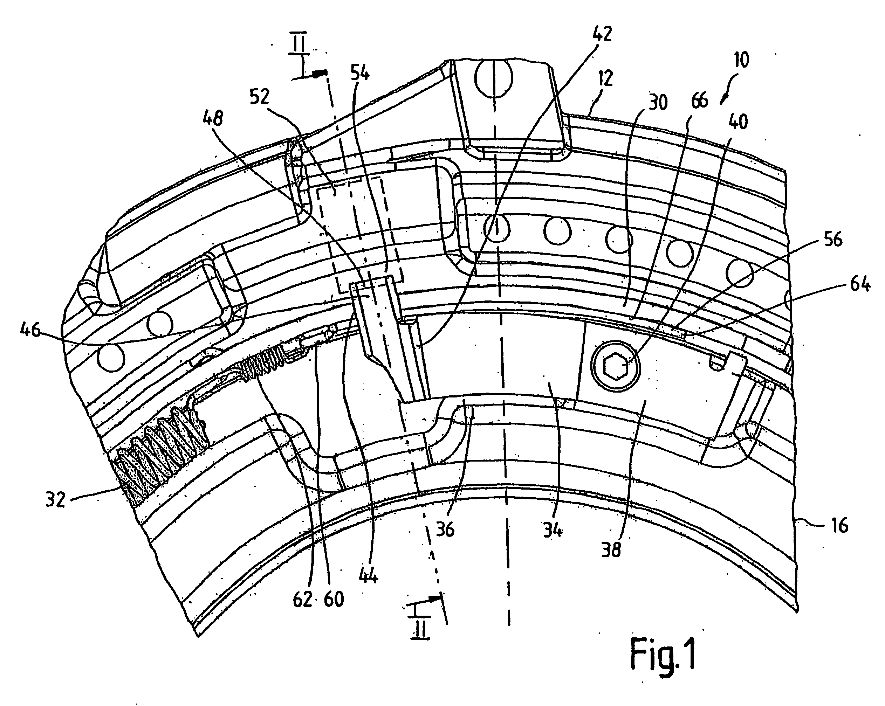

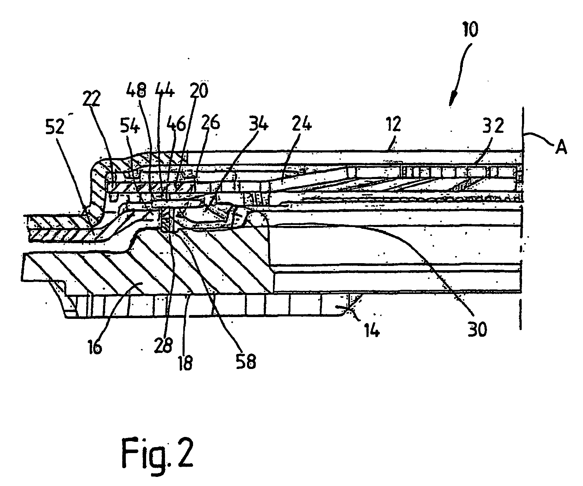

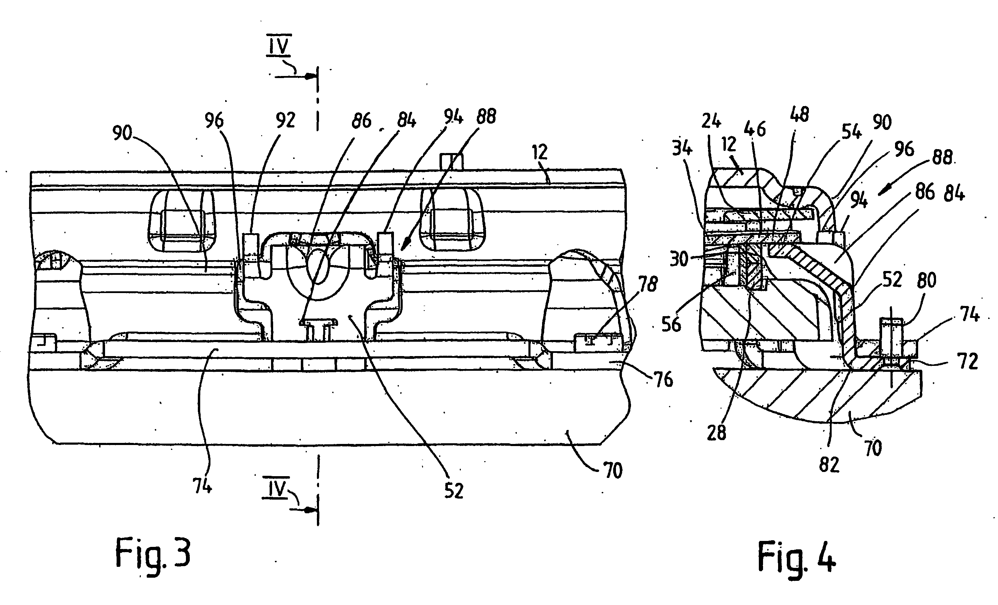

Bevor mit Bezug auf die Figuren 3 bis 7 die Details der vorliegenden Erfindung beschrieben werden, wird zunächst mit Bezug auf die Figuren 1 und 2 der grundsätzliche Aufbau einer Druckplattenbaugruppe, in welcher die Prinzipien der vorliegenden Erfindung verwirklicht sein können, beschrieben, ebenso wie deren Funktionsweise zur Durchführung einer Verschleißkompensation. Es sei bereits hier darauf hingewiesen, dass der im Folgenden konkret beschriebene konstruktive Aufbau nur ein Beispiel einer derartigen Druckplattenbaugruppe betrifft. Es ist selbstverständlich in verschiedensten Bereichen möglich, Änderungen am konstruktiven Aufbau vorzusehen, ohne dabei die Prinzipien der vorliegenden Erfindung zu beeinträchtigen.

Die in den Figuren 1 und 2 gezeigte Druckplattenbaugruppe 10 umfasst ein Gehäuse 12, das in einem axialen Endbereich 14 zur Festlegung an einer in den Figuren nicht gezeigten Schwungmassenanordnung, beispielsweise einem einteiligen Schwungrad oder auch einem Mehrmassenschwungrad, ausgebildet ist. Innerhalb des Gehäuses 12 ist eine allgemein mit 16 bezeichnete Anpressplatte vorgesehen, die mit ihrer Reibfläche 18 gegen eine in den Figuren ebenfalls nicht dargestellte Kupplungsscheibe pressbar ist und dabei die Kupplungsscheibe gegen eine entsprechende Reibfläche der Schwungmassenanordnung presst. Die Anpressplatte 16 ist mit dem Gehäuse 12 durch nicht dargestellte Elemente, wie z.B. Tangentialblattfedern o. dgl., in Richtung der Drehachse A bewegbar, gegen Drehung um die Drehachse A bezüglich des Gehäuses 12 jedoch im Wesentlichen festgehalten verbunden.

Im Gehäuse 12 ist ferner ein allgemein mit 20 bezeichneter Kraftspeicher angeordnet. Dieser stützt sich in seinem radial äußeren Bereich 22 am Gehäuse 12 ab, ist in seinem radial inneren Bereich im Bereich sogenannter Federzungen 24 zur Beaufschlagung durch einen Ausrückermechanismus in ziehender Art und Weise ausgebildet und beaufschlagt in seinem radial mittleren Bereich die Anpressplatte 16 über eine nachfolgend noch beschriebene Verschleißnachstellvorrichtung 26. Es sei darauf hingewiesen, dass die Darstellung eines Kraftspeichers 20 beziehungsweise einer Druckplattenbaugruppe 10 des gezogenen Typs nur beispielhaft ist. Selbstverständlich könnte der Kraftspeicher 20 am Gehäuse 12 auch radial innerhalb desjenigen Bereichs, in welchem er über die Verschleißnachstellvorrichtung 26 die Anpressplatte 16 beaufschlagt, getragen sein und somit zum drükenden Angreifen eines Ausrückermechanismus vorgesehen sein. Im dargestellten Ausgestaltungsbeispiel umfasst die Verschleißnachstellvorrichtung 26 zwei Nachstellringe 28, 30. Der Nachstellring 28 ist an der Anpressplatte 16 abgestützt, und der Nachstellring 30 dient der Beaufschlagung durch den Kraftspeicher bzw. die Membranfeder 20. An ihren aneinander anliegenden Oberflächenbereichen weisen die beiden Nachstellringe 28, 30 zueinander komplementär ausgestaltete Schräg- oder Keilflächenbereiche auf, die in Umfangsrichtung sich erstreckend mit einem keilartigen Profil ausgebildet sind. Eine Relativdrehung der beiden Nachstellringe 28, 30 bezüglich einander hat zur Folge, dass die Gesamtaxialerstreckung der Verschleißnachstellvorrichtung 26 geändert wird. Durch eine radial innerhalb der Nachstellringe 28, 30 angeordnete Schraubenzugfeder sind die beiden Nachstellringe 28, 30 zur Drehbewegung bezüglich einander vorgespannt. Dabei greift die Feder 32 in ihren Endbereichen am Nachstellring 28 einerseits und beispielsweise an der Anpressplatte 16 andererseits an.

An der Anpressplatte 16 ist ferner radial innerhalb der Nachstellringe 28, 30 ein Erfassungselement 34 einer allgemein mit 36 bezeichneten Spielgeberanordnung vorgesehen. Das Erfassungselement 34 ist in einem Umfangsendbereich 38 vermittels eines Schraubbolzens 40 an der Anpressplatte 16 festgelegt, in seinem anderen Umfangsendbereich 42 weist das Erfassungselement 34 einen sich durch eine Umfangs- und Axialausnehmung 44 des Nachstellrings 30 nach radial außen hindurch erstreckenden Erfassungsabschnitt 46 auf. Das Erfassungselement 34 ist aus federndem Material, beispielsweise Federblech, hergestellt und ist in seiner Einbaulage derart vorgespannt, dass es den Nachstellring 30 und somit die gesamte Verschleißnachstellvorrichtung 26 axial beaufschlagt. Durch diese Vorspannwirkung sind die beiden Nachstellringe 28, 30 zwischen dem Erfassungsabschnitt 46 und der Anpressplatte 16 geklemmt, so dass auch die Vorspannwirkung der Feder 32 nicht dazu führen kann, dass die Nachstellringe 28, 30 sich bezüglich einander in einem derartigen Drehsinn bewegen, dass die Gesamtaxialerstreckung der Verschleißnachstellvorrichtung 26 vergrößert wird. In seinem freien Endbereich 48 übergreift der Erfassungsabschnitt 46 des Erfassungselementes 34 ein nach radial innen bis an die Nachstellringe 28, 30 heran ragendes Blockierelement 52, dessen Anbringung nachfolgend mit Bezug auf die Fig. 3 - 7 detailliert beschrieben wird. Es besteht somit, wie insbesondere in Figur 1 erkennbar, zwischen dem Endbereich 48 und einem entsprechenden Endbereich 54 des Blockierelements 52 ein radialer Überlapp.

Dem Erfassungselement 34 der Spielgeberanordnung 36 ist ferner ein allgemein mit 56 bezeichnetes Arretierelement zugeordnet. Dieses Arretierelement 56 erstreckt sich radial innerhalb der Nachstellringe 28, 30 beziehungsweise liegt an deren Innenumfangsfläche an und ist in einer entsprechenden Ausnehmung 58 der Anpressplatte 16 geführt, in welcher auch der an dieser Anpressplatte 16 aufliegende Nachstellring 28 geführt ist. An dem Arretierelement 56 greift in einem Umfangsendbereich 60 desselben eine zweite Schraubenzugfeder 62 an, welche in ihrem zweiten Endbereich an der Schraubenzugfeder 32 festgelegt beziehungsweise eingehängt ist, und zwar an demjenigen Ende derselben, an dem diese mit dem, wie im Folgenden noch beschrieben, in Umfangsrichtung um die Drehachse A drehbaren Nachstellring 28 zusammenwirkt. Der Nachstellring 30 ist durch das Erfassungselement 34 beziehungsweise den in die Ausnehmung 44 eingreifenden Erfassungsabschnitt 46 gegen Drehung in Umfangsrichtung im Wesentlichen blockiert. Das Arretierelement 56 weist ausgehend von seinem Endbereich 60 zu seinem freien Endbereich 64 hin eine zunehmende Axialerstreckung auf, d.h. ist in Umfangsrichtung zwischen den Endbereichen 60, 62 derart keilartig ausgebildet, dass in demjenigen Bereich, in welchem in Figur 1 der Erfassungabschnitt 46 über dem Arretierelement 56 positioniert ist, die geringste Axialerstreckung vorgesehen ist, und in demjenigen Bereich, welcher dem Endbereich 64 naheliegt, die größte Axialerstreckung vorgesehen ist. Durch die Wirkung der Feder 62 ist das Arretierelement 56 dann in Umfangsrichtung vorgespannt und so weit bewegt, bis es mit seiner keilartig positionierten Fläche 66 am Erfassungsabschnitt 46 des Erfassungselementes 34 anstößt und in Umfangsrichtung nicht mehr weiter bewegt werden kann.

Die Funktionsweise der erfindungsgemäßen Druckplattenbaugruppe 10 im Drehbetrieb, insbesondere bei Auftreten von Verschleiß, wird im Folgenden beschrieben.

In einem neuen, noch nicht verschlissenen Zustand der im Allgemeinen an der Kupplungsscheibe vorgesehenen Reibbeläge nehmen die beiden Nachstellringe 28, 30 eine beim Zusammenfügen der Druckplattenbaugruppe 10 vorgegebene Relativdrehstellung ein, in welcher auch die Verschleißnachstellvorrichtung 26 auf Grund der entsprechenden Relativpositionierung der Schrägflächenbereiche die geringste Axialerstreckung aufweist und in welcher darüberhinaus die Feder 32 im größten Ausmaß vorgespannt ist.

In diesem Zustand sind dann, wie bereits beschrieben, die Nachstellringe 28, 30 durch die Vorspannwirkung des Erfassungselements 34 gegen Drehbewegung bezüglich einander arretiert. Im eingerückten Zustand ist des Weiteren der Nachstellring 30 durch den Kraftspeicher 20 beaufschlagt, so dass durch die in diesem Zustand dann an der Kupplungsscheibe anliegende Anpressplatte 16 und die daraus resultierende Gegenkraft ebenfalls eine Blockierung der beiden Nachstellringe 28, 30 gegen Bewegung vorgesehen ist. Diese vermittels des Kraftspeichers 20 bereit gestellte Blockierwirkung ist deutlich stärker, da die vom Kraftspeicher 20 bereit gestellte Kraft deutlich größer ist, als die Vorspannkraft des Erfassungselementes 34.

In diesem neuen Zustand der Druckplattenbaugruppe 10 kann ferner vorgesehen sein, dass der Endabschnitt 48 des Erfassungsabschnittes 46 zu dem gegenüber liegenden Endabschnitt 54 des Blockierelementes 53 einen axialen Abstand aufweist.

Tritt nun im Betrieb beispielsweise bei wiederholtem Durchführen von Ein- und Auskuppelvorgängen ein Verschleiß der Reibbeläge auf, so bewegt sich im eingerückten Zustand die Anpressplatte 16 zunehmend näher an die Schwungmassenanordnung heran, was in der Darstellung der Figur 2 einer Bewegung der Anpressplatte 16 bezüglich des Gehäuses 12 nach unten entspricht. Dabei bewegt sich auch der Endabschnitt 48 des Erfassungsabschnitts 46 näher an das Blockierelement 52 heran. Bei Überschreiten eines bestimmten Verschleißausmaßes wird der Erfassungsabschnitt 46 durch das Blockierelement 52 an einer weiteren Bewegung gehindert. Dies bedeutet, dass bei dann weiter auftretendem Verschleiß beispielsweise bei einem Einkuppelvorgang der Erfassungsabschnitt 46 durch das Blockierelement 52 axial festgehalten wird und durch die auftretende weitere Axialbewegung der Anpressplatte 16 von dem Nachstellring 30 abhebt. Es entsteht zwischen dem Erfassungsabschnitt 46, welcher zuvor am Nachstellring 30 aufgelegen hat, und diesem Nachstellring 30 ein Axialspiel. Da beim Einkuppelvorgang beziehugsweise im eingekuppelten Zustand die Nachstellringe 28, 30, wie vorangehend beschrieben, noch durch den Kraftspeicher 20 beaufschlagt sind, kann trotz der nicht mehr vorhandenen Blockierwirkung des Erfassungselementes 34 keine Relativdrehbewegung der beiden Nachstellringe 28, 30 auftreten. Bei der Blockierung der Weiterbewegung des Erfassungsabschnittes 46 würde dieser Erfassungsabschnitt 46 des Weiteren grundsätzlich von der Keilfläche 66 des Arretierelementes 56 abheben. Da jedoch dieses Arretierelement 56 unter Vorspannung der Feder 62 steht, bewegt dieses sich unmittelbar am Beginn der Abhubbewegung des Erfassungabschnittes 46 in den sich bildenden Zwischenraum. Die Folge davon ist, dass bei einem nachfolgend durchzuführenden Ausrückvorgang, bei welchem der Erfassungsabschnitt 46 mit seinem Endabschnitt 48 axial vom Blockierelement 52 wieder abhebt, dieser Erfassungsabschnitt 46 sich nicht wieder zurück in Anlage an die zunächst noch durch den Kraftspeicher 20 an einer Nachstellbewegung gehinderte Verschleißnachstellvorrichtung 26 gelangen kann. Es bleibt somit auch zunächst am Beginn des Ausrückvorgangs das zuvor verschleißbedingt aufgebaute Spiel zwischen dem Erfassungsabschnitt 46 und dem Nachstellring 30 vorhanden.

Erst bei einem nachfolgend durchgeführten Auskuppelvorgang, bei welchem durch Aufheben beziehungsweise Mindern der Beaufschlagungskraft des Kraftspeichers 20 die Klemmwirkung der beiden Nachstellringe 28, 30 bezüglich einander im Wesentlichen aufgehoben wird beziehungsweise im Wesentlichen nur noch durch die die Rückstellung der Anpressplatte 16 bewirkenden Tangentialblattfedern vorgesehen ist, deren axiale Vorspannkraft jedoch vergleichsweise gering ist, kann nunmehr unter Wirkung der Schraubenzugfeder 32 der Nachstellring 28 sich in Umfangsrichtung bewegen; der Nachstellring 30 ist durch das Erfassungselement 34 gegen Bewegung in Umfangsrichtung gehalten. Bei dieser Relativdrehung zwischen den beiden Nachstellringen 28, 30 und der dabei auftretenden Abgleitbewegung der verschiedenen Schrägflächenbereiche aneinander verändert die Verschleißnachstellvorrichtung 26 ihre Axialerstreckung, und zwar so lange, bis der Nachstellring 30 wieder an dem Erfassungsabschnitt 46 zur Anlage kommt. Die Axialerstreckung der Verschleißnachstellvorrichtung 26 ist dabei dann im Wesentlichen in einem Ausmaß geändert worden, in welchem zuvor der Erfassungsabschnitt 46 vom Nachstellring 30 abgehoben hat, welches Ausmaß wiederum im Wesentlichen demjenigen Bewegungsausmaß entspricht, in welchem die Anpressplatte 16 sich verschleißbedingt im eingekuppelten Zustand näher an die Schwungmassenanordnung heran bewegt hat. Dies bedeutet letztendlich, dass bei Durchführung eines derartigen Kompensationsvorganges im Wesentlichen derjenige Verschleiß kompensiert worden ist, welcher zuvor durch die Spielgeberanordnung 36 tatsächlich erfasst worden ist. Die Folge davon ist, dass die Axialerstreckung zwischen der Reibfläche 18 der Anpressplatte 16 und demjenigen Bereich oder Punkt, in welchem der Kraftspeicher 20 die Verschleißnachstellvorrichtung 26 beaufschlagt, in einem derartigen Ausmaß vergrößert wurde, in welchem die Dicke der Reibbeläge abgenommen hat. Dies hat zur Folge, dass die Einbaulage des Kraftspeichers auch bei Auftreten von Verschleiß unverändert bleibt und somit eine Änderung der Ein- beziehungsweise Auskuppelkraftcharakteristik bei einer derartigen Druckplattenbaugruppe nicht auftreten wird.

Durch das Einhängen der Feder 62 an demjenigen Endbereich der Feder 32, welcher mit dem sich bewegenden Nachstellring 28 zusammenwirkt, wird erreicht, dass auch bei zunehmendem Verschleiß und zunehmender Umfangsbewegung des Arretierelements 56 die Feder 62 im Wesentlichen nicht entspannt wird. Vielmehr ist dafür gesorgt, dass durch die Bewegung des Nachstellrings 28 bei Durchführung des Kompensationvorgangs die Feder 62 bei dann festgehaltenem Arretierelement 56 wieder gespannt wird, so dass dann, wenn erneut Verschleiß auftritt, für das Arretierelement 56 im Wesentlichen wieder die gleiche Vorspannkraft zur Bewegung in Umfangsrichtung bereitgestellt ist.

Es sei prinzipiell darauf hingeweisen, dass vorangehend eine Druckplattenbaugruppe mit Verschleißkompensation beschrieben worden ist, welche in verschiedensten Aspekten konstruktiv geändert werden kann. So ist es beispielsweise möglich, dass die Verschleißnachstellvorrichtung 26 lediglich einen einzigen Nachstellring aufweist, welcher dann bei Auftreten von Verschleiß und Durchführung eines Kompensationsvorganges sich in Umfangsrichtung um die Drehachse A bewegen kann und dabei mit an diesem vorgesehenen Schrägflächenbereichen an komplementären Schrägflächenbereichen der Anpressplatte abgleiten kann. Auch ist das Bereitstellen mehrerer voneinander getrennt bewegbarer Verschleißnachstellelemente, welche nicht notwendigerweise Ringgestalt haben müssen, möglich. Einzelne Keilelemente, die dann über jeweilige Federanordnungen angesteuert werden und mit separaten Erfassungselementen zusammenwirken, können ebenso vorgesehen sein.

Man erkennt in Fig. 3 und in Fig. 4, dass das Blockierelement 52 im Wesentlichen zweifach abgewinkelt ist und so näherungsweise eine S- oder Z-artige Kontur aufweist. In einem Endstegbereich 72, welcher einen Befestigungsbereich des Blockierelements 52 bildet, ist dieses bei mit einer Schwungmasse 70 zusammengesetztem Gehäuse 12 fest bezüglich des Gehäuses 12 gehalten. Man erkennt, dass dieser Endstegbereich 72 nach radial außen greift und zwischen einem in Abstand zur Schwungmasse 70 liegenden Umfangsabschnitt 74 eines nach radial außen vorstehenden Randbereichs 76 des Gehäuses 12 und der Schwungmasse 70 festgehalten ist. Mit diesem Randbereich 76 ist das Gehäuse 12 durch mehrere in Umfangsrichtung verteilt liegende Schraubbolzen 78 an der Schwungmasse 70 festgelegt. Bei mit der Schwungmasse 70 fest verbundenem Gehäuse 12 ist der Endstegbereich 72 fest zwischen dem Abschnitt 74 des Randbereichs 76 und der Schwungmasse 70 geklemmt. An diesem Endstegbereich 72 ist ein Trägerelement 80 vorgesehen, welches eine entsprechende Öffnung 82 im Abschnitt 74 des Randbereichs 76 durchsetzt und dort Bewegungsspiel hat. Durch dieses Trägerelement 80 ist das Blockierelement 52 grundsätzlich am Gehäuse 12 gehalten, wobei jedoch bei noch nicht herangeführter Schwungmasse 70 das Trägerelement 80 sich in der Öffnung 82 soweit verschieben kann, bis es mit einem erweiterten Kopfbereich 84 am Abschnitt 74 zur Anlage kommt. Dies ist dann eine Positionierung des Blockierelements 52, in welcher dieses nicht mit dem Erfassungselement 34 zusammenwirken kann, so dass auch bei noch nicht mit der Schwungmasse 70 zusammengefügtem Gehäuse 12 die Gefahr einer ungewünschten Auslenkung des Erfassungselements 34 vermieden werden kann. Beim Zusammensetzen des Gehäuses 12 mit der Schwungmasse 70 verschiebt die Schwungmasse 70 dann den Endstegbereich 72 zusammen mit dem Trägerelement 80 bezüglich des Abschnitts 74 des Randbereichs 76 in Richtung der Drehachse A, bis, wie vorangehend bereits angesprochen, der Endstegbereich 72 fest zwischen der Schwungmasse 70 und dem Abschnitt 74 des Randbereichs 76 geklemmt ist.

Der in axialem Versatz zum Endstegbereich 72 liegende und zur Wechselwirkung mit dem Erfassungselement 34 vorgesehene Endbereich 54 des Gehäuses bildet einen zweiten Endstegbereich, welcher über einen sich näherungsweise in axialer Richtung erstreckenden Verbindungsabschnitt 84 mit dem vorangehend angesprochenen Endstegbereich 72 verbunden ist. Hier kann durch Bereitstellung entsprechender Ausformungen 86 im Übergangsbereich zwischen dem Verbindungabschnitt 84 und dem den Endbereich 54 bildenden Endstegbereich eine erhöhte Stabilität gegen Verformung bereitgestellt werden. Im Übergangsbereich zwischen dem Endstegbereich 72 und dem Verbindungsabschnitt 84 ist dies auf Grund der Einspannung zwischen dem Abschnitt 74 des Randbereichs 76 und der Schwungmasse 70 nicht möglich. Es bestünde daher grundsätzlich die Gefahr, dass bei Beaufschlagung des Endbereichs 54 durch das Erfassungselement 34 das Blockierelement 52 vor allem im Übergangsbereich zwischen dem Verbindungsabschnitt 84 und dem Endstegbereich 72 abgebogen wird. Um dem entgegenzuwirken, ist an dem Blockierelement 52 ein Abstützbereich 88 vorgesehen, mit welchem das Blockierelement 52 an einem Außenumfangsbereich 90 des Gehäuses 12 abgestützt ist. Wie man in Fig. 3 erkennt, umfasst der Abstützbereich 88 zwei vom Verbindungsabschnitt 84 ausgehende und in Umfangsabstand zueinander liegende Abstützabschnitte 92, 94. Diese erstrecken sich näherungsweise in Richtung der Drehachse A und liegen an dem Außenumfangsbereich 90 des Gehäuses 12 in einem Bereich an, welcher eine vom Blockierelement 52 durchsetzte Öffnung 96 des Gehäuses 12 umgibt. Vorzugsweise ist die Anordnung derart, dass bei zwischen dem Abschnitt 74 und der Schwungmasse 70 fest geklemmtem Endstegbereich 72 durch seine eigene Elastizität und seine Formgebung das Blockierelement 52 mit den Erfassungsabschnitten 92, 94 gegen den Außenumfangsbereich 90 des Gehäuses 12 vorgespannt ist.

Durch die feste Abstützung des Blockierelements 52 in einem zwischen der Festlegung desselben bezüglich des Gehäuses 12 einerseits und der Wechselwirkung desselben mit dem Erfassungselement 34 andererseits liegenden Bereich wird erlangt, dass auch bei axialer Belastung des Endbereichs 54 eine Verformung des Blockierelements 52 nicht auftreten kann, was zur Folge hat, dass eine entsprechend genaue Verschleißerfassung durchgeführt wird.

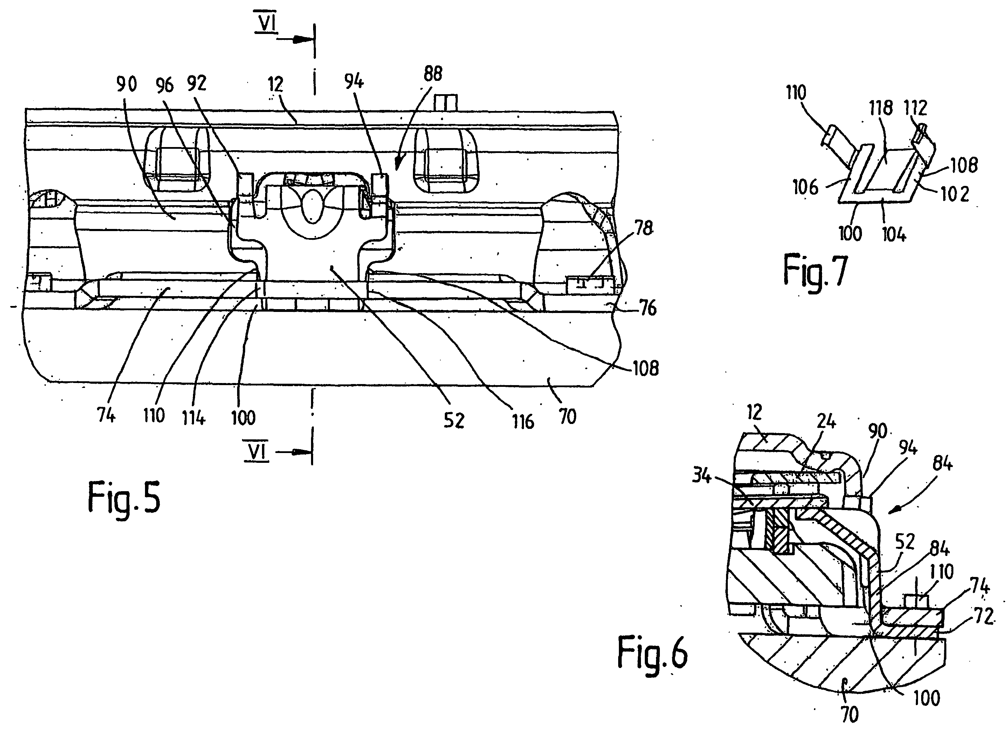

In den Figuren 5 bis 7 ist eine alternative Ausgestaltungsform der erfindungsgemäßen Druckplattenbaugruppe gezeigt. Das Blockierelement 52 entspricht im Wesentlichen dem vorangehend bereits beschriebenen Aufbau und weist auch hier die zwei Abstützabschnitte 92, 94 zur Abstützung am Außenumfangsbereich 90 des Gehäuses 12 auf. Zusätzlich ist bei der in den Figuren 5 bis 7 dargestellten Ausgestaltungsform ein als Trägerelement wirksames Federelement 100 vorgesehen. Dieses weist einen U-förmigen Rahmenbereich 102 auf, der mit dem Endstegbereich 72 des Blockierelements 52 beispielsweise durch Verlötung, Verklebung oder Verschweißung fest verbunden sein kann, und zwar so, dass ein Verbindungsstegabschnitt 104 des U-förmigen Rahmenbereichs 102 nach radial innen positioniert ist, dabei ist eine feste Verbindung nicht notwendig. Von den beiden U-Schenkeln 106, 108 gehen dann näherungsweise orthogonal zu der durch den Rahmen 102 aufgespannten Ebene zwei in ihren freien Endbereichen hakenartig ausgebildete Halteabschnitte 110, 112 aus, welche zugeordnete Öffnungen 114, 116 im Abschnitt 74 des Randbereichs 76 durchsetzen. Durch diese Halteabschnitte 110, 112 wird das Blockierelement 52 vor dem Zusammenfügen des Gehäuses 12 mit der Schwungmasse 70 wieder am Gehäuse 12 gehaltert, und zwar derart, dass auf Grund der noch vorhandenen Bewegbarkeit eine Wechselwirkung mit dem Erfassungselement 34 nicht auftreten kann. Erst beim Heranführen des Gehäuses 12 verschieben sich die Halteabschnitte 110, 112 in den zugeordneten Öffnungen 114, 116, so dass der Endstegbereich 72 des Blockierelements 52 näher an den Abschnitt 74 des Randbereichs 76 herangeschoben wird.

Bei der in den Figuren 5 bis 7 dargestellten Ausgestaltungsform ist vorgesehen, dass zum Zulassen größerer Fertigungstoleranzen beim Blockierelement 52 der zwischen dem Abschnitt 74 des Randbereichs 76 und der Schwungmasse 70 im zusammengesetzten Zustand gebildete Zwischenraum etwas größer ist oder sein kann, als die Dicke des Endstegbereichs 72 des Blockierelements 52 zusätzlich der Dicke des Federelements 100 im Bereich seines Rahmenbereichs 102. D.h., auch bei fest mit der Schwungmasse 70 verbundenem Gehäuse 12 findet keine feste Einklemmung des Endstegbereichs 72 statt. Vielmehr weist bei dieser Ausgestaltungform das Federelement 100 einen Federzungenbereich 118 auf, der vom Verbindungssteg 104 ausgeht und derart geformt ist, dass er unter Vorspannung an der Schwungmasse 70 anliegt, während unter entsprechender Vorspannung dann die Endstegbereiche 106, 108 am Blockierelement 52 anliegen bzw. dieses beaufschlagen. Durch die Vorspannwirkung des Federelements 100 wird das Blockierelement 52 in der Darstellung der Fig. 6 im Gegenuhrzeugersinn verkippt, so dass es mit seinen Abstützabschnitten 92, 94 wieder fest unter Vorspannung am Außenumfangsbereich 90 des Gehäuses 12 anliegt. Im schwungmassennahen Bereich stützt sich das Blockierelement 52 im Übergangsbereich zwischen dem Verbindungsabschnitt 84 und dem Endstegbereich 72 nach radial außen hin am Abschnitt 74 des Randbereichs 76 ab. Somit ist auch bei Beaufschlagung durch das Erfassungselement 34 das Blockierelement 52 durch die Abstützung bezüglich des Gehäuses 12 in zwei in axialem Abstand zueinander liegenden Bereichen in definierter Positioniereung gehalten, so dass weder eine Verschiebung noch eine Verformung des Blockierelements 52 auftreten wird.

Durch die vorliegende Erfindung werden einfach zu realisierende, gleichwohl jedoch äußerst wirksame Maßnahmen vorgeschlagen, welche für eine Erhöhung der Erfassungsgenauigkeit bei Auftreten von Verschleiß sorgen, da eine unter Belastung erfolgende Verformung des Blockierelements nicht auftreten kann. Es ist selbstverständlich, dass auch bei den erfindungsgemäß ausgestalteten Bauteilen verschiedene Variationen vorgenommen werden können. So können selbstverständlich mehr als die zwei dargestellten Abstützabschnitte vorhanden sein. Auch ist es selbstverständlich möglich, die Ausgestaltungsform mit dem der Vorspannung und Halterung dienenden Federelement zu kombinieren mit dem Trägerelement 80 der Ausgestaltungsform gemäß den Figuren 3 und 4.

## Patentansprüche

1. Druckplattenbaugruppe für eine Reibungskupplung, umfassend:
- eine zur Verbindung mit einer Schwungmassenanordnung ausgebildete Gehäuseanordnung (12),
- eine in der Gehäuseanordnung (12) in Richtung einer Drehachse bewegbar gehaltene Anpressplatte (16),
- einen Kraftspeicher (20),
- eine im Kraftübertragungsweg zwischen dem Kraftspeicher (20) und der Anpressplatte (16) wirkende Verschleißnachstellvorrichtung (26), wobei die Verschleißnachstellvorrichtung (26) wenigstens ein zur Verschleißnachstellung in einer Nachstellrichtung bewegbares Nachstellelement (28) aufweist,
- wenigstens eine Spielgeberanordnung (36), umfassend ein an der Anpressplatte (16) vorgesehenes Erfassungselement (34), das bei Auftreten von Verschleiß in Anlage an einem bezüglich der Gehäuseanordnung (12) festgelegten Blockierelement (52) kommt oder bringbar ist, wobei das Blockierelement (52) einen Befestigungsbereich (72) zur Festlegung desselben bezüglich der Gehäuseanordnung (12) sowie einen Anlagebereich (54) zur Anlage des Erfassungselements (34) aufweist,
**dadurch gekennzeichnet, dass** das Blockierelement (52) ferner einen Abstützbereich (88) zur Abstützung desselben bezüglich der Gehäuseanordnung (12) aufweist.

2. Druckplattenbaugruppe nach Anspruch 1,
**dadurch gekennzeichnet, dass** der Abstützbereich (88) zwischen dem Befestigungsbereich (72) und dem Anlagebereich (54) vorgesehen ist.

3. Druckplattenbaugruppe nach Anspruch 1 oder 2,
**dadurch gekennzeichnet, dass** der Abstützbereich (88) wenigstens einen zur Abstützung an einem Außenumfangsbereich (90) der Gehäuseanordnung (12) vorgesehenen Abstützabschnitt (92, 94) umfasst.

4. Druckplattenbaugruppe nach Anspruch 3,
**dadurch gekennzeichnet, dass** wenigstens zwei Abstützabschnitte (92, 94) in Umfangsrichtung mit Abstand zueinander vorgesehen sind.

5. Druckplattenbaugruppe nach Anspruch 3 oder 4,
**dadurch gekennzeichnet, dass** das Blockierelement (52) abgewinkelt ausgebildet ist zum Bereitstellen des Befestigungsbereichs (72) mit axialem Versatz zum Anlagebereich (54) und dass der wenigstens eine Abstützabschnitt (92, 94) sich von einem den Befestigungsbereich (72) mit dem Anlagebereich (54) verbindenden Abschnitt (84) des Blockierelements (52) weg erstreckt.

6. Druckplattenbaugruppe nach einem der Ansprüche 1 bis 5,
**gekennzeichnet durch** ein Trägerelement (80; 100), **durch** welches das Blockierelement (52) an der Gehäuseanordnung (12) derart getragen ist, dass vor dem Verbinden der Druckplattenbaugruppe 10 mit der Schwungmassenanordnung (70) das Blockierelement (52) in einem Zustand ist, in welchem es nicht zur Blockierwechselwirkung mit dem zugeordneten Erfassungselement (34) bereit ist.

7. Druckplattenbaugruppe nach Anspruch 6,
**dadurch gekennzeichnet, dass** das Blockierelement (52) durch das Trägerelement (80; 100) im Bereich eines in Anlage an der Schwungmassenanordnung (70) zu positionierenden Randbereichs (76) der Gehäuseanordnung (12) getragen ist.

8. Druckplattenbaugruppe nach Anspruch 7,
**dadurch gekennzeichnet, dass** das Trägerelement (80; 100) mit dem Blockierelement (52) bei dem Verbinden der Gehäuseanordnung (12) mit der Schwungmassenanordnung (70) näherungsweise in Richtung der Drehachse (A) verlagerbar ist.

9. Druckplattenbaugruppe nach Anspruch 7 oder 8,
**dadurch gekennzeichnet, dass** bei mit der Schwungmassenanordnung (70) verbundener Gehäuseanordnung (12) das Blockierelement (52) durch Klemmwirkung zwischen der Gehäuseanordnung (12) und der Schwungmassenanordnung (70) festgehalten ist.

10. Druckplattenbaugruppe nach einem der Ansprüche 3 bis 9,
**dadurch gekennzeichnet, dass** bei mit der Schwungmassenanordnung verbundener Gehäuseanordnung (12) das Blockierelement (52) mit dem wenigstens einen Abstützabschnitt (92, 94) unter Vorspannung an der Gehäuseanordnung (12) anliegt.

11. Druckplattenbaugruppe nach Anspruch 10,
**dadurch gekennzeichnet, dass** das Blockierelement (52) durch ein Federelement (100) mit dem wenigstens einen Abstützabschnitt (92, 94) in Anlage an der Gehäuseanordnung (12) vorgespannt ist.

12. Druckplattenbaugruppe nach Anspruch 6 und Anspruch 11,
**dadurch gekennzeichnet, dass** das Trägerelement (100) das Federelement bildet.

13. Druckplattenbaugruppe nach einem der Ansprüche 1 bis 12,
**gekennzeichnet durch** ein Arretierelement (56), welches **durch** Federvorspannung in einen zwischen dem Erfassungselement (34) und der Anpressplatte (16) gebildeten Zwischenraum vorgespannt ist und **durch** welches das Erfassungselement (34) bei **durch** Anlage desselben an dem Blockierelement (52) verursachter Auslenkung bezüglich der Anpressplatte (16) gegen Rückbewegung aus der Auslenkstellung arretierbar ist.

14. Druckplattenbaugruppe nach Anspruch 13,
**dadurch gekennzeichnet, dass** das Arretierelement (56) keilartig ausgebildet ist.

15. Reibungskupplung, umfassend eine Druckplattenbaugruppe nach einem der vorangehenden Ansprüche.

## Claims

1. Thrust-plate assembly for a friction clutch, comprising:
- a housing arrangement (12) designed for connection to a flywheel mass arrangement,
- a pressure plate (16) held movably in the direction of a rotational axis in the housing arrangement (12),
- a force accumulator (20),
- a wear-adjustment device (26) acting in the force transmission path between the force accumulator (20) and the pressure plate (16), the wear-adjustment device (26) having at least one adjustment element (28) which can be moved in an adjustment direction for wear adjustment,
- at least one play indicator arrangement (36), comprising a detection element (34) which is provided on the pressure plate (16) and, when wear occurs, comes into contact, or can be brought into contact, with a blocking element (52) fixed in position with respect to the housing arrangement (12), the blocking element (52) having a fastening region (72) for fixing the latter in position with respect to the housing arrangement (12), and also having a bearing region (54) for contact with the detection element (34),
**characterized in that** the blocking element (52) furthermore has a support region (88) for supporting the latter with respect to the housing arrangement (12).

2. Thrust-plate assembly according to Claim 1, **characterized in that** the support region (88) is provided between the fastening region (72) and the bearing region (54).

3. Thrust-plate assembly according to Claim 1 or 2, **characterized in that** the support region (88) comprises at least one support section (92, 94) provided for support on an outer circumferential region (90) of the housing arrangement (12).

4. Thrust-plate assembly according to Claim 3, **characterized in that** at least two support sections (92, 94) are provided in the circumferential direction at a distance from one another.

5. Thrust-plate assembly according to Claim 3 or 4, **characterized in that** the blocking element (52) is of angled-away design to provide the fastening region (72) with an axial offset to the bearing region (54), and **in that** the at least one support section (92, 94) extends away from one section (84) of the blocking element (52), which section (84) connects the fastening region (72) to the bearing region (54).

6. Thrust-plate assembly according to one of Claims 1 to 5, **characterized by** a carrier element (80; 100) by means of which the blocking element (52) is supported on the housing arrangement (12) in such a way that, before the thrust-plate assembly 10 is connected to the flywheel mass arrangement (70), the blocking element (52) is in a state in which it is not ready for blocking interaction with the associated detection element (34).

7. Thrust-plate assembly according to Claim 6, **characterized in that** the blocking element (52) is supported by the carrier element (80; 100) in the region of an edge region (76) of the housing arrangement (12), which edge region (76) is to be positioned in contact with the flywheel mass arrangement (70).

8. Thrust-plate assembly according to Claim 7, **characterized in that** the carrier element (80; 100) together with the blocking element (52) can be displaced approximately in the direction of the rotational axis (A) when the housing arrangement (12) is connected to the flywheel mass arrangement (70).

9. Thrust-plate assembly according to Claim 7 or 8, **characterized in that**, when the housing arrangement (12) is connected to the flywheel mass arrangement (70), the blocking element (52) is held fixedly by a clamping action between the housing arrangement (12) and the flywheel mass arrangement (70).

10. Thrust-plate assembly according to one of Claims 3 to 9, **characterized in that**, when the housing arrangement (12) is connected to the flywheel mass arrangement, the at least one support section (92, 94) of the blocking element (52) rests on the housing arrangement (12) with prestress.

11. Thrust-plate assembly according to Claim 10, **characterized in that** the at least one support section (92, 94) of the blocking element (52) is prestressed in contact with the housing arrangement (12) by a spring element (100).

12. Thrust-plate assembly according to Claim 6 and Claim 11, **characterized in that** the carrier element (100) forms the spring element.

13. Thrust-plate assembly according to one of Claims 1 to 12, **characterized by** a locking element (56) which is prestressed by spring prestress into an intermediate space formed between the detection element (34) and the pressure plate (16), and by means of which locking element (56) the detection element (34) can be locked against movement back out of the deflected position when deflected with respect to the pressure plate (16) when the said detection element (34) bears against the blocking element (56).

14. Thrust-plate assembly according to Claim 13, **characterized in that** the locking element (56) is of wedge-like design.

15. Friction clutch, comprising a thrust-plate assembly according to one of the preceding claims.

## Revendications

1. Ensemble de plateaux de poussée pour un embrayage à friction, comprenant :
- un agencement de boîtiers (12) destiné à être relié avec un agencement de masses d'équilibrage,
- un plateau de pression (16) maintenu de façon mobile dans l'agencement de boîtiers (12), en direction d'un axe de rotation,
- un accumulateur d'énergie (20),
- un dispositif de rattrapage d'usure (26) agissant dans le trajet de transmission de force entre l'accumulateur d'énergie (20) et le plateau de pression (16), le dispositif de rattrapage d'usure (26) étant muni d'au moins un élément de rattrapage (28) mobile dans une direction de rattrapage, pour le rattrapage de l'usure,
- au moins un agencement de transmetteurs de jeu (36) comprenant un élément de détection (34) prévu sur le plateau de pression (16), qui en cas d'apparition d'un phénomène d'usure vient s'appliquer ou peut être applicable sur un élément de blocage (52) fixé en fonction de l'agencement de boîtiers (12), l'élément de blocage (52) étant muni d'une zone de fixation (72), pour fixer ce dernier par rapport à l'agencement de boîtiers (12), ainsi que d'une zone d'application (54) pour l'application de l'élément de détection (34),
**caractérisé en ce que** l'élément de blocage (52) est muni par ailleurs d'une zone d'appui (88) pour soutenir ce dernier par rapport à l'agencement de boîtiers (12).

2. Ensemble de plateaux de poussée selon la revendication 1, **caractérisé en ce que** la zone d'appui (88) est prévue entre la zone de fixation (72) et la zone d'application (54).

3. Ensemble de plateaux de poussée selon l'une quelconque des revendications 1 ou 2, **caractérisé en ce que** la zone d'appui (88) comprend au moins une section d'appui (92, 94) pour l'appui sur une zone périphérique externe (90) de l'agencement de boîtiers (12).

4. Ensemble de plateaux de poussée selon la revendication 3, **caractérisé en ce qu'**au moins deux sections d'appui (92, 94) sont prévues à distance l'une par rapport à l'autre en direction périphérique.

5. Ensemble de plateaux de poussée selon l'une quelconque des revendications 3 ou 4, **caractérisé en ce que** l'élément de blocage (52) est conçu de façon coudée, pour la mise à disposition de la zone de fixation (72), avec un déport axial par rapport à la zone d'application (54) et **en ce que** la section d'appui (92, 94) qui est au moins au nombre de un s'étend à partir d'une section (84) de l'élément de blocage (52) reliant la zone de fixation (72) avec la zone d'application (54).

6. Ensemble de plateaux de poussée selon l'une quelconque des revendications 1 à 5, **caractérisé par** un élément porteur (80 ; 100) grâce auquel l'élément de blocage (52) est porté sur l'agencement de boîtiers (12), de façon à ce qu'avant de relier l'ensemble de plateaux de poussée 10 avec l'agencement de masses d'équilibrage (70), l'élément de blocage (52) soit dans un état dans lequel il n'est pas prêt à assurer une interaction de blocage avec l'élément de détection (34) associé.

7. Ensemble de plateaux de poussée selon la revendication 6, **caractérisé en ce que** l'élément de blocage (52) est porté par l'élément porteur (80 ; 100) dans la région d'une zone de bordure (76) de l'agencement de boîtiers (12) devant être positionnée en application sur l'agencement de masses d'équilibrage (70).

8. Ensemble de plateaux de poussée selon la revendication 7, **caractérisé en ce que** lors de la liaison de l'agencement de boîtiers (12) avec l'agencement de masses d'équilibrage (70), l'élément porteur (80 ; 100) avec l'élément de blocage (52) est approximativement déplaçable en direction de l'axe de rotation (A).

9. Ensemble de plateaux de poussée selon l'une quelconque des revendications 7 ou 8, **caractérisé en ce que** lorsque l'agencement de boîtiers (12) est relié à l'agencement de masses d'équilibrage (70), l'élément de blocage (52) est maintenu par effet de serrage entre l'agencement de boîtiers (12) et l'agencement de masses d'équilibrage (70).

10. Ensemble de plateaux de poussée selon l'une quelconque des revendications 3 à 9, **caractérisé en ce que** lorsque l'agencement de boîtiers (12) est relié à l'agencement de masses d'équilibrage (70), l'élément de blocage (52) s'applique sur la section d'appui (92, 94) qui est au moins au nombre de un, sous précontrainte sur l'agencement de boîtiers (12).

11. Ensemble de plateaux de poussée selon la revendication 10, **caractérisé en ce que** l'élément de blocage (52) est précontraint en application sur l'agencement de boîtiers (12) avec la section d'appui (92, 94) qui est au moins au nombre de un par un élément à ressort (100) .

12. Ensemble de plateaux de poussée selon l'une quelconque des revendications 6 et 11, **caractérisé en ce que** l'élément porteur (100) forme l'élément à ressort.

13. Ensemble de plateaux de poussée selon l'une quelconque des revendications 1 à 12, **caractérisé par** un élément d'arrêt (56) qui est précontraint par précontrainte d'un ressort dans un espace intermédiaire entre l'élément de détection (34) et le plateau de pression (16) et grâce auquel l'élément de détection (34) est arrêtable contre un mouvement en retour de la position de déviation, lors d'une déviation par rapport au plateau de pression (16) provoquée par son application sur l'élément de blocage (52).

14. Ensemble de plateaux de poussée selon la revendication 13, **caractérisé en ce que** l'élément d'arrêt (56) est conçu sous forme d'une cale.

15. Embrayage à friction, comprenant un ensemble de plateaux de poussée selon l'une quelconque des revendications précédentes.
